# FASCICULE DE BREVET EUROPEEN

(11) **EP 2 315 515 B1**
(45) Date de publication et mention de la délivrance du brevet: **28.03.2012**
(21) Numéro de dépôt: 09797560.1
(22) Date de dépôt: 25.06.2009
(51) Int. Cl.: A01D 85/00, A01D 90/08, A01D 87/12

(54) **REMORQUE COMPORTANT UNE PLATEFORME BASCULANTE POUR TRANSPORTER ET DECHARGER DES BALLES DE PAILLE**
ANHÄNGER MIT EINER KIPPBAREN PLATTFORM ZUM TRANSPORTIEREN UND ABLADEN VON STROHBALLEN
TRAILER COMPRISING A TILTING PLATFORM FOR TRANSPORTING AND UNLOADING BALES OF STRAW

(30) Priorité: 25.06.2008 FR 0803560
(43) Date de publication de la demande: 04.05.2011
(73) Titulaire: Bonduelle, Laurent, 75012 Paris (FR)
(72) Inventeur: Bonduelle, Laurent, 75012 Paris (FR)
(74) Mandataire: Parzy, Benjamin Alain
(86) Numéro de dépôt international: PCT/FR2009/000786
(87) Numéro de publication internationale: WO 2010/007241

(56) Documents cités:
- EP-A- 0 761 085
- GB-A- 2 083 790
- US-A- 3 485 397
- US-A- 3 622 024
- US-A- 4 295 772

## Description

L'invention concerne la manutention de balles de paille pour stocker ces balles en constituant un agencement de stockage de balles formé de plusieurs piles de balles adossées les unes aux autres.

### ARRIERE PLAN DE L'INVENTION

Le stockage de balles de paille parallélépipédiques est généralement assuré en disposant des piles de balles de mêmes hauteurs les unes contre les autres, de manière à les agencer pour constituer un ensemble compact ayant une forme extérieure pouvant être par exemple parallélépipédique.

La collecte et le stockage des balles peuvent être assurés avec une remorque du type de celle divulguée par le document de brevet EP0761085. Celle-ci comporte un châssis roulant portant d'une part une plateforme basculante entre une position horizontale et une position verticale, et d'autre part des moyens de manutention situés devant cette plateforme pour charger les balles sur cette dernière.

Les moyens de manutention de cette remorque permettent de saisir les balles disposées sur le sol, une par une ou deux par deux, et de les charger au fur et à mesure sur la plateforme qui est alors positionnée horizontalement.

On constitue ainsi un chargement comportant deux séries de balles de paille superposées l'une à l'autre sur la plateforme, et s'étendant le long de celle-ci. Chaque série est formée de balles placées les unes devant les autres, les balles de la première série étant posées sur une surface d'appui de la plateforme alors que les balles de la seconde série reposent sur celles de la première série.

Une fois que le chargement a été constitué, la remorque est ramenée vers le site de stockage, pour procéder à son déchargement. Elle est d'abord placée à proximité de piles de balles existantes, constituées préalablement de façon analogue. Sa plateforme est alors relevée à la verticale, pour constituer deux nouvelles piles de balles contiguës, situées contre les deux piles existantes.

On constitue ainsi, par tournées successives, un ensemble relativement massif de piles de balles contiguës, qui peut, une fois terminé, être recouvert d'une bâche pour le protéger des intempéries.

Pour assurer la stabilité de l'agencement, on place des balles de paille additionnelles en partie supérieure de celui-ci, chaque balle additionnelle étant décalée pour reposer sur les balles supérieures de deux piles contiguës. Ces balles additionnelles assurent que les parties supérieures de deux piles contiguës ne s'écartent pas l'une de l'autre, ce qui améliore significativement la stabilité de l'agencement.

Les balles additionnelles sont déposées sur le haut de l'agencement par un opérateur utilisant un appareil de manutention dédié du type chariot élévateur. Ces balles additionnelles sont disposées par exemple au fur et à mesure de la constitution de l'agencement : une fois que deux nouvelles piles ont été déposées, l'opérateur vient déposer deux balles additionnelles en partie supérieure de ces piles, de manière décalée.

### OBJET DE L'INVENTION

Le but de l'invention est de proposer une solution pour faciliter la constitution d'un tel agencement de stockage de balles en simplifiant la mise en place des balles décalées de la partie supérieure de l'agencement.

### RESUME DE L'INVENTION

A cet effet, l'invention a pour objet un dispositif d'empilement de balles de paille, comportant : un châssis roulant et une plateforme montée pivotante sur ce châssis autour d'un axe transversal horizontal situé à une extrémité arrière du châssis, entre une position horizontale de chargement et une position sensiblement verticale de déchargement, les balles étant chargées sur la plateforme horizontale pour constituer un chargement comportant au moins une série de balles s'étendant longitudinalement, constituée de balles posées les unes devant les autres sur la plateforme, les balles étant déchargées par basculement de la plateforme à la verticale pour constituer au moins une pile de balles disposées les unes sur les autres, caractérisé en ce qu'il comporte des moyens de décalage pour décaler une partie du chargement incluant une balle située à une extrémité du chargement, par rapport aux autres balles du chargement perpendiculairement à une direction selon laquelle sont alignées ces autres balles.

Avec cette solution, le positionnement décalé des bales supérieures de l'agencement est réalisé dès la constitution du chargement, en décalant les balles situées à l'avant de ce chargement, de sorte qu'il n'est plus nécessaire de prévoir une opération supplémentaire mettant en oeuvre un chariot élévateur.

L'invention concerne également un dispositif tel que défini ci-dessus, dans lequel la plateforme comporte un corps présentant une surface d'appui des balles, et dans lequel les moyens de décalage comportent un plateau porté par le corps situé à une extrémité de la plateforme pour recevoir la partie du chargement incluant une balle d'extrémité, le plateau étant mobile selon une direction normale à la surface d'appui entre une position rétractée dans laquelle il est au même niveau que la surface d'appui et une position décalée dans laquelle il dépasse de la surface d'appui.

L'invention concerne également un dispositif tel que défini ci-dessus, dans lequel le corps a un contour généralement rectangulaire comportant deux échancrures latérales, et dans lequel le plateau comporte deux patins mobiles portés par le corps, les deux patins mobiles étant logés dans les échancrures lorsqu'ils sont rétractés.

L'invention concerne également un dispositif tel que défini ci-dessus, comportant des moyens élévateurs commandés pour déplacer le plateau entre les positions rétractée et décalée.

L'invention concerne également un dispositif tel que défini ci-dessus, comportant au moins un vérin hydraulique pour déplacer le plateau entre sa position rétractée et sa position décalée.

L'invention concerne également un dispositif tel que défini ci-dessus, comportant deux ridelles latérales mobiles entre une position dite serrée pour maintenir le chargement en position sur la plateforme, et une position dite desserrée pour libérer le chargement.

### BREVE DESCRIPTION DES FIGURES

La figure 1 est une vue en perspective d'un dispositif selon un mode de réalisation de l'invention montrant celui-ci lors de la saisie de deux balles posées sur le sol ;
La figure 2 est une vue analogue à la figure 1 montrant le dispositif durant une première phase de chargement des deux balles saisies au sol ;
La figure 3 est une vue analogue aux figures précédentes montrant le dispositif durant une seconde phase de chargement sur la plateforme des deux balles saisies au sol ;
La figure 4 est une vue analogue aux figures précédentes montrant le dispositif durant le chargement de deux autres balles ;
La figure 5 est une vue analogue aux figures précédentes montrant le dispositif portant un premier chargement comportant une série inférieure de balles et une série supérieure de balles reposant sur cette série inférieure et ayant une longueur inférieure à celle de la série inférieure ;
La figure 6 est une vue analogue aux figures précédentes montrant le dispositif une fois qu'une partie avant de son premier chargement a été décalée par rapport à la partie arrière du premier chargement ;
La figure 7 est une vue analogue aux figures précédentes montrant le dispositif lors du basculement de son premier chargement ;
La figure 8 est une vue analogue aux figures précédentes montrant le dispositif portant un deuxième chargement comportant une série inférieure de balles et une série supérieure de balles reposant sur cette série inférieure et ayant la même longueur ;
La figure 9 est une vue analogue aux figures précédentes montrant le dispositif une fois qu'une partie avant de son deuxième chargement a été décalée par rapport à la partie arrière du deuxième chargement ;
La figure 10 est une vue analogue aux figures précédentes montrant le dispositif lors du basculement de son deuxième chargement contre les piles constituées lors basculement de son premier chargement.

### DESCRIPTION DETAILLEE DE L'INVENTION

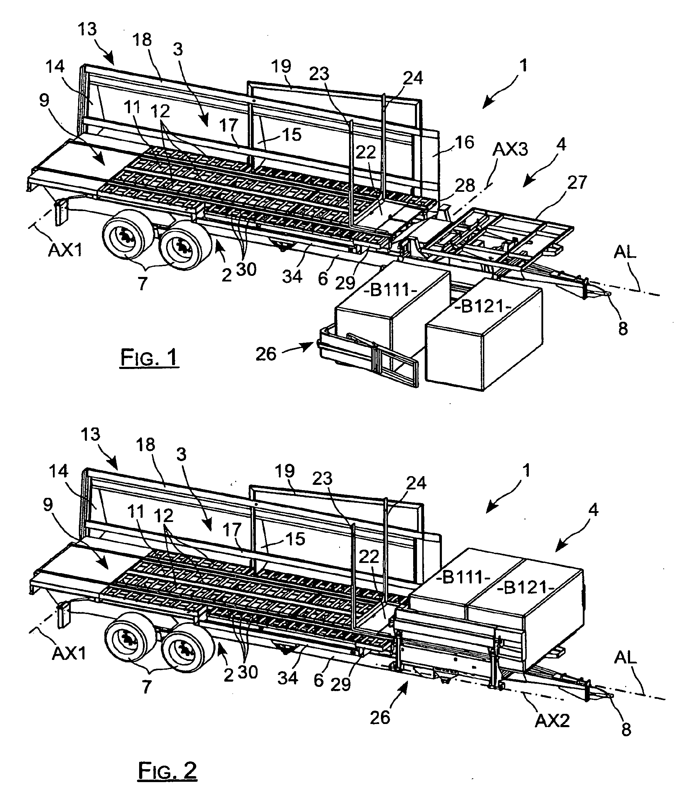

Comme visible en figure 1, le dispositif selon l'invention peut se présenter sous forme d'une remorque, repérée par 1, comportant un châssis roulant 2 portant d'une part un plateforme basculante repérée généralement par 3 et d'autre part des moyens de chargement de balles de pailles repérées généralement par 4.

Le châssis roulant 2 comporte des longerons dont un seul est visible dans la figure 1 en y étant repéré par 6, auxquels est fixé un train roulant comportant des roues repérées par 7. Le châssis 2 comporte un organe d'attache 8 monté à son extrémité avant, et par lequel il peut être attelé à un tracteur. La plateforme 3 qu'il porte part de l'arrière de ce châssis roulant 2 en s'étendant sur la majeure partie de sa longueur, alors que les moyens de chargement 4 sont portés par le châssis 2 en étant situés dans sa partie avant.

La plateforme 3 comporte un corps principal repéré par 9, qui est monté basculant par rapport au châssis 2, autour d'un axe horizontal repéré par AX1. L'axe AX1 qui est situé à l'extrémité arrière du châssis 2 s'étend transversalement par rapport à la direction longitudinale de la remorque 1. Cette direction longitudinale de la remorque 1, qui coïncide avec sa direction d'avancement, est représentée par un autre axe repéré par AL.

Le corps 9 définit une surface d'appui 11 sensiblement plane, destinée à recevoir une série de balles de paille à transporter. Un ensemble de rouleaux 12 est disposés le long de la surface d'appui 11 du corps 9 de manière à faciliter le déplacement longitudinal de balles de paille le long de cette surface d'appui 11.

Le corps 9 porte sur son côté gauche, par rapport à la direction d'avancement, une ridelle latérale gauche repérée par 13. Cette ridelle est un ensemble rigide constitué par des poteaux 14, 15, 16 portant un rail inférieur 17 et un rail supérieur 18 horizontaux, ainsi qu'un cadre 19 situé en partie avant de cette ridelle 13 pour lui conférer une hauteur plus importante dans cette région.

Cette ridelle 13 est mobile en rotation autour d'un axe coïncidant avec un bord latéral du corps 9. Son mouvement de rotation est commandé par un ou plusieurs actionneurs pour la déplacer entre une position dite serrée, et une position dite desserrée.

Dans la position relâchée qui correspond à la situation de la figure 1, la ridelle forme un angle supérieur à l'angle droit par rapport à la surface d'appui 11, de sorte qu'elle dépasse latéralement du corps, de manière à simplement éviter qu'une partie du chargement ne puisse tomber de la plateforme 3.

Lorsque la ridelle 13 est en position serrée, elle forme avec la surface d'appui 11 un angle légèrement inférieur à l'angle droit de manière à enserrer le chargement que porte la surface d'appui 11.

Le corps 9 porte également une ridelle latérale droite, non représentée, du même type que la ridelle 13, et qui est également mobile en rotation autour d'un axe coïncidant avec le long bord droit du contour rectangulaire du corps 9, entre une position serrée et une position relâchée.

Le corps 9 porte encore une fourche 22 mobile en translation le long de ce corps, et comportant deux bras 23 et 24 s'étendant perpendiculairement à la surface d'appui 11, ces bras 23 et 24 ayant des hauteurs supérieures à celles des ridelles latérales.

Les moyens de chargement 4 comprennent une pince 26 en forme de U, montée pivotante autour d'un axe longitudinal AX2 représenté en figure 2, pour se déployer latéralement et enserrer une ou deux balles posées sur le sol telles que les balles repérées par B111 et B121. Ils comprennent également une palette 27 montée basculante, autour d'un axe transversal AX3 orienté horizontalement, entre une position horizontale et une position verticale.

Comme visible dans les figures 1 et 2, la pince 26 est d'abord déployée latéralement, puis la remorque est avancée pour placer les deux balles B111 et B121 dans le U que constitue la pince 26. Dans l'exemple des figures, les balles B111 et B121 ont des formes parallélépipédiques et sont placées l'une devant l'autre au sol en étant orientées transversalement par rapport à la direction d'avancement AL.

La pince 26 est alors pilotée pour enserrer ces deux balles, et pour pivoter autour de son axe AX2 de manière à les déposer sur la palette 27 qui est alors horizontale, ce qui correspond à la situation de la figure 2. Elle est ensuite pilotée pour lâcher les balles B111 et B121, puis pour être à nouveau déployée.

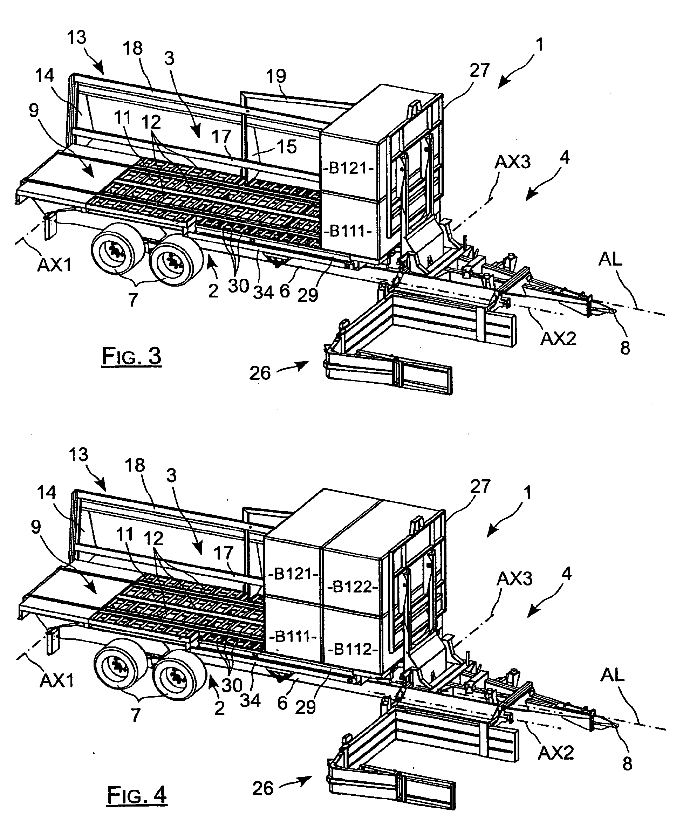

La palette 27 pivote alors à la verticale pour charger ces deux balles B111 et B121 sur la plateforme 3, ces balles étant alors retenues longitudinalement par les bras 23 et 24 de la fourche 22, ce qui correspond à la situation de la figure 3.

Deux autres balles repérées par B112 et B122 sont ensuite chargées de manière analogue, ce qui conduit à la situation illustrée en figure 4, puis deux autres balles B113 et B123 chargées de manière analogue permettent de constituer la partie arrière du chargement qui est ainsi constituée par les balles B111 à B113 et B121 à B123.

Les balles suivantes sont ensuite chargées de façon analogue pour constituer la partie avant du chargement. Mais les balles suivantes sont saisies une par une par la pince 26, et non plus deux par deux, pour que la partie avant du chargement comporte une seule série de balles B124 à B126, et non pas deux séries superposées l'une à l'autre.

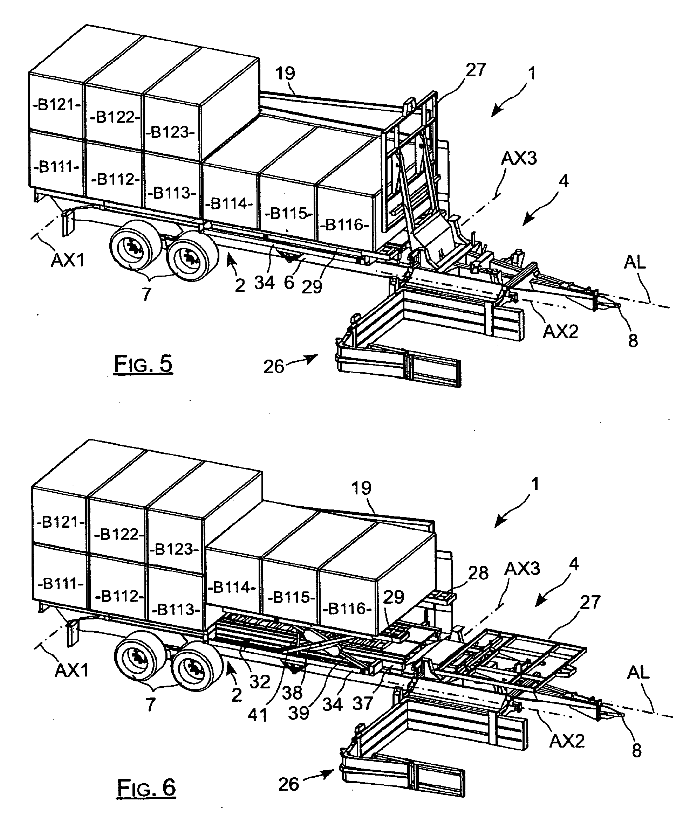

Le premier chargement qui est représenté en figure 5 lorsqu'il est complet, comporte ainsi une série inférieure de six balles repérées par B111 à B116 s'étendant depuis l'arrière jusqu'à l'avant de la plateforme, et une série supérieure de trois balles repérées par B121 à B123 situées en partie arrière du premier chargement. La balle située à l'extrémité avant du chargement est ainsi la balle B116.

Comme visible dans la figure 5, les trois balles constituant la série supérieure, à savoir les balles B121 à B123 sont situées au niveau de la moitié arrière de la plateforme en étant posées respectivement sur les balles B111 à B113 de la série inférieure.

Conformément à l'invention, la plateforme 3 comporte des moyens pour décaler les balles situées en partie avant du chargement par rapport aux balles situées en partie arrière du chargement, de manière à décaler au moins la balle d'extrémité la plus en avant, à savoir la balle B116, par rapport aux autres balles du chargement.

Ces moyens de décalage comportent un plateau levant qui est ici formé par un patin latéral gauche et un patin latéral droit, repérés respectivement par 28 et 29, qui sont portés par le corps 9 en étant mobiles selon une direction normale à la surface d'appui 11, entre une position rétractée, et une position décalée.

Lorsqu'ils sont rétractés, comme dans les figures 1 à 5, les patins 28 et 29 sont situés au même niveau que la surface d'appui 11, de manière à permettre le chargement des balles sur la surface d'appui 11, en autorisant leur glissement le long de celle-ci.

En position décalée, ces deux patins 28 dépassent de la surface d'appui 11 tout en s'étendant parallèlement à celle-ci, de manière à surélever les balles situées en partie avant du chargement, à savoir les balles B114 à B116 par rapport aux balles B111 à B113 et B121 à B123 situées en partie arrière du chargement, comme c'est le cas dans la figure 6.

Les patins 28 et 29 ont chacun une forme générale rectangulaire, et sont pourvus de rouleaux 30 pour faciliter le glissement des balles lorsqu'ils sont rétractés. Ces patins 28 et 29 sont orientés longitudinalement et ont une longueur légèrement inférieure à la moitié de la longueur de la plateforme 3

Ces patins 28 et 29 sont espacés transversalement l'un de l'autre d'une valeur inférieure à la largeur des balles transportées, de manière à venir en appui sur chaque extrémité latérale de la surface inférieure de ces balles. Les balles B114 à B116 de la partie avant du chargement peuvent ainsi être soulevées en actionnant conjointement les deux patins 28 et 29 pour les faire passer de la position rétractée à la position décalée.

Chaque patin 28 et 29 est porté par le corps de plateforme 9 dont la moitié avant a une largeur inférieure à la largeur de sa moitié arrière. Cette diminution de largeur constitue deux logements latéraux ou échancrures, repérées par 31 et 32, dans lesquelles se positionnent ces patins 28 et 29 lorsqu'ils sont rétractés.

Ainsi, lorsque les patins 28 et 29 sont rétractés, le corps 9 définit, conjointement avec ceux-ci une surface supérieure plane.

Chaque patin 28, 29 est porté par un dispositif élévateur comportant un croisillon déformable et un vérin. Ces dispositifs élévateurs sont eux-mêmes portés respectivement par deux supports latéraux 33 et 34, s'étendant longitudinalement et fixés aux parties avant de deux poutres longitudinales 36 et 37 constituant la structure porteuse du corps 9 de la plateforme 3.

Ces poutres 36 et 37 sont transversalement espacées l'une de l'autre d'une distance correspondant à la largeur du corps 9 dans sa moitié avant, elles portent des plaques et supports de rouleaux constituant conjointement la surface d'appui roulante 11.

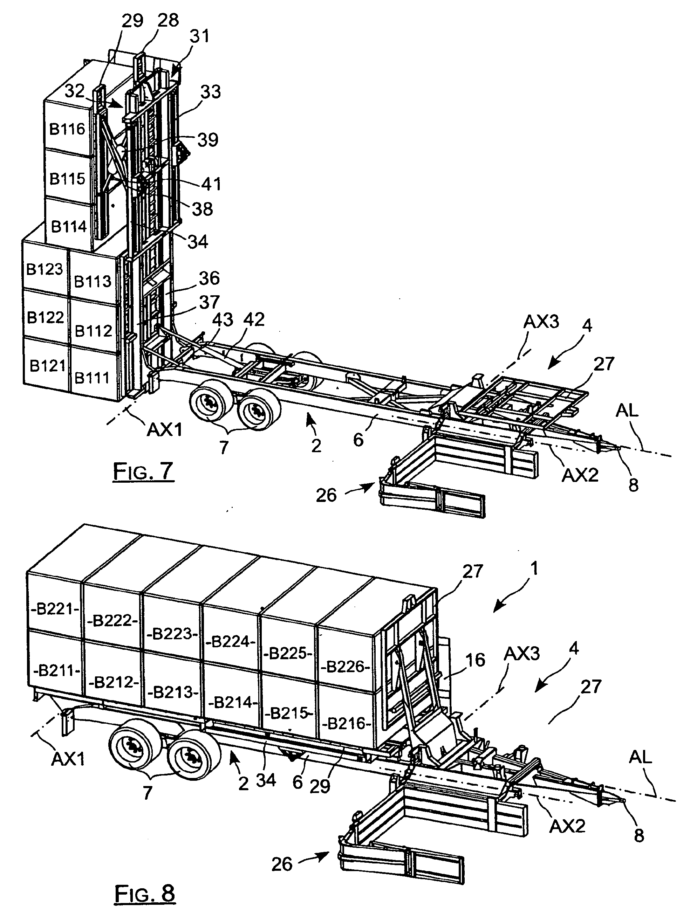

Le dispositif élévateur du patin latéral droit 29 qui apparaît plus clairement dans les figures 6 et 7 comporte une première et une seconde jambe 38 et 39 solidarisées l'une à l'autre en leurs centres par une liaison pivot.

Chaque jambe 38, 39 a son extrémité arrière solidarisée à une partie arrière du support latéral 34 par une liaison pivot d'axe transversal, et son extrémité avant solidarisée à une partie avant du patin 29 par une autre liaison pivot d'axe transversal mais qui est également apte à coulisser le long du patin.

Un vérin repéré par 41 présentant une extrémité liée au support 33 et une autre extrémité liée à une partie arrière de la première jambe 38 permet ainsi de commander un déplacement en translation du patin 29 selon une direction normale à la surface d'appui 11, entre une position rétractée et une position décalée.

Comme on l'aura compris, le patin gauche 28 avec son dispositif élévateur a une structure analogue à celle du patin droit 29 et de son élévateur. Ces deux patins sont commandés pour être déplacés conjointement, depuis la position rétractée vers la position décalée, et inversement.

Durant tout le chargement, les patins 28 et 29 sont rétractés et les ridelles latérales sont dans leur position desserrée, afin de permettre la progression des balles le long de la plateforme.

Une fois que toutes les balles ont été chargées, les patins 28 et 29 sont actionnés pour passer dans leur position décalée, où ils sont situés à même hauteur par rapport au reste de la plateforme, de manière à décaler les balles B114 à B116, en les surélevant d'une hauteur correspondant à la demi-hauteur de chaque balle.

Ceci conduit à la situation de la figure 6, la partie avant du chargement étant alors décalée par rapport à la partie arrière. A ce stade, les ridelles latérales peuvent être commandées pour se resserrer sur le chargement afin de le maintenir en position sur la plateforme.

La remorque 1 est alors amenée sur le site où doit être constitué l'agencement, puis elle est pilotée pour basculer sa plateforme 3, en actionnant deux vérins 42 et 43 prévus à cet effet et interposés entre le châssis 2 et la plateforme 3, à proximité de l'axe AX1.

Une fois que la plateforme 3 est complètement verticale, les ridelles latérales sont commandées pour desserrer le chargement, ce qui permet de déplacer la remorque vers l'avant, de manière à la dégager des piles de balles ainsi constituées.

On a alors constitué des piles de balles correspondant à une première partie de l'agencement de stockage de balles, les autres parties de l'agencement étant constituées ensuite, durant des tournées supplémentaires.

La remorque 1 est alors commandée pour ramener sa plateforme 3 à l'horizontale et pour ramener les patins 28 et 29 dans leur position rétractée, puis elle est tractée vers le site de collecte des balles de paille, pour procéder à un deuxième chargement.

La constitution du second chargement est alors assurée de façon analogue à la constitution du premier chargement, c'est à dire en utilisant les moyens de chargement 4 situés à l'avant de la remorque 1.

Le second chargement diffère cependant du premier en ce qu'il comporte une série inférieure de balles B211 à B216 à laquelle est superposée une série supérieure de balles, repérées par B221 à B226 qui a cette fois-ci la même longueur que la série inférieure : ces deux séries balles comportent chacune six balles.

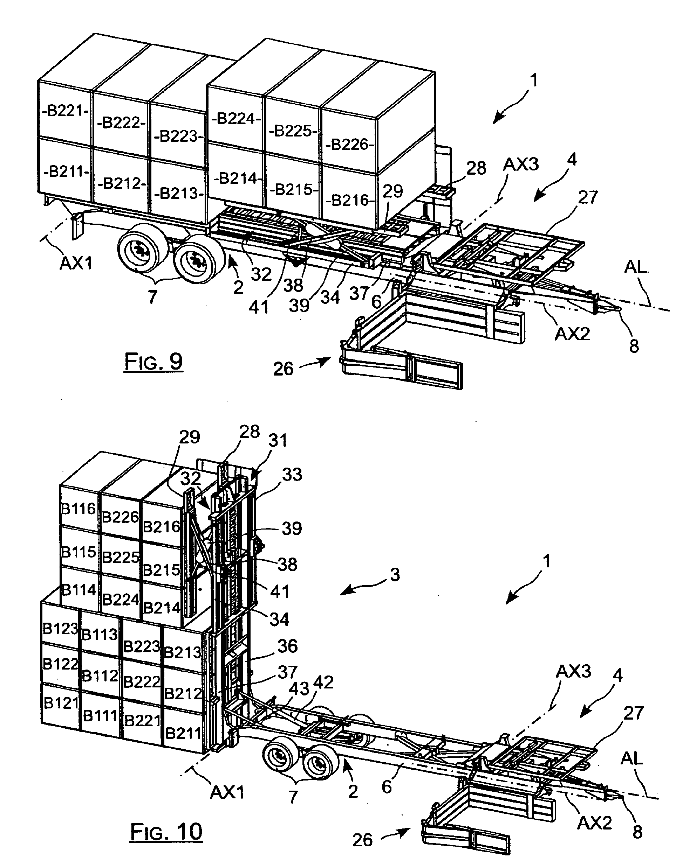

Une fois que le deuxième chargement a été constitué, ce qui correspond à la situation de la figure 8, les patins 28 et 29 sont commandés pour passer de leur position rétractée à leur positon décalée, de manière à surélever la partie avant du chargement par rapport à la partie arrière, ce qui correspond à la situation de la figure 9.

Les ridelles sont alors commandées pour se resserrer sur le chargement afin de le maintenir. On notera que les cadres de ces ridelles, tels que le cadre 19 de la ridelle latérale gauche 13, permettent d'exercer une pression y compris sur les balles surélevées situées en partie supérieure avant du chargement. Ces balles B224 à B226, sont en effet elles aussi enserrées par les ridelles du fait que leurs cadres ont une hauteur supérieure à celles des poteaux 14-16 portant les rails 17 et 18.

La remorque est alors ramenée sur le site où est constitué l'agencement de stockage de balles, et elle est positionnée devant les piles qui ont été constituées lors de la dépose du premier chargement.

Plus particulièrement, pour le deuxième déchargement, la remorque est placée dans une position correspondant à celle du premier déchargement, mais décalée vers l'avant selon la direction AL d'une longueur correspondant à la longueur de deux balles de paille.

La remorque 1 est alors commandée pour basculer sa plateforme 3 à la verticale. Une fois qu'elle a atteint une position complètement verticale, les ridelles sont commandées pour desserrer le chargement, et la remorque 1 est tractée vers l'avant pour la dégager de l'agencement.

Dans cette situation, les piles résultant du deuxième déchargement sont adossées aux piles résultant du premier déchargement pour constituer un tout compact. Toutes les balles situées dans la moitié supérieure de l'agencement ainsi constitué sont décalées horizontalement par rapport aux balles de la moitié inférieure de l'agencement, ce qui confère à l'ensemble la stabilité requise.

Comme on l'aura compris, un agencement de stockage de balles est formé par étapes successives, en constituant des piles qui sont directement adossées les unes aux autres dès qu'elles sont déchargées. On peut par exemple constituer un troisième et un quatrième chargement du même type respectivement que le premier et le deuxième, et constituer des piles adossées respectivement à celle résultant du premier et du second chargement.

On peut également constituer un troisième et un quatrième chargement du même type que le second, de manière à former des piles qui sont alors adossées à successivement à celles résultant du second déchargement, puis à celles résultant du troisième déchargement.

En d'autres termes, l'agencement de stockage de balles a au sol une base de forme rectangulaire, dont les dimensions et proportions de ce rectangle peuvent être choisies pour être adaptées à la situation.

## Revendications

1. Dispositif d'empilement de balles de paille, comportant : un châssis roulant (2) et une plateforme (3) montée pivotante sur ce châssis autour d'un axe transversal horizontal (AX1) situé à une extrémité arrière du châssis (2), entre une position horizontale de chargement et une position sensiblement verticale de déchargement, les balles (B111-B226) étant chargées sur la plateforme horizontale pour constituer un chargement comportant au moins une série de balles s'étendant longitudinalement, constituée de balles (B111-B116 ; B211-B216) posées les unes devant les autres sur la plateforme (3), les balles (B111-B226) étant déchargées par basculement de la plateforme (3) à la verticale pour constituer au moins une pile de balles disposées les unes sur les autres, **caractérisé en ce qu'**il comporte des moyens de décalage (28, 29) pour décaler une partie du chargement (B114-B116; B214-B216, B224-B216) incluant une balle (B116 ; B216, B226) située à une extrémité du chargement, par rapport aux autres balles du chargement perpendiculairement à une direction selon laquelle sont alignées ces autres balles.

2. Dispositif selon la revendication 1, dans lequel la plateforme comporte un corps (9) présentant une surface d'appui (11) des balles (B111-B226), et dans lequel les moyens de décalage comportent un plateau (28, 29) porté par le corps (9) situé à une extrémité de la plateforme (3) pour recevoir la partie du chargement incluant une balle d'extrémité (B116 ; B216, B226), le plateau (28, 29) étant mobile selon une direction normale à la surface d'appui (11) entre une position rétractée dans laquelle il est au même niveau que la surface d'appui (11) et une position décalée dans laquelle il dépasse de la surface d'appui (11) .

3. Dispositif selon la revendication 2, dans lequel le corps (9) a un contour généralement rectangulaire comportant deux échancrures latérales (31, 32), et dans lequel le plateau comporte deux patins mobiles (28, 29) portés par le corps (9), les deux patins (28, 29) mobiles étant logés dans les échancrures (31, 32) lorsqu'ils sont rétractés.

4. Dispositif selon la revendication 2 ou 3, comportant des moyens élévateurs commandés pour déplacer le plateau (28, 29) entre les positions rétractée et décalée.

5. Dispositif selon la revendication 2, 3 ou 4, comportant au moins un vérin hydraulique (41) pour déplacer le plateau (28, 29) entre sa position rétractée et sa position décalée.

6. Dispositif selon l'une des revendications précédentes, comportant deux ridelles latérales (13) mobiles entre une position dite serrée pour maintenir le chargement en position sur la plateforme, et une position dite desserrée pour libérer le chargement.

## Claims

1. Device for stacking strawbales, including: a wheeled chassis (2) and a platform (3) mounted on this chassis to pivot about a horizontal transverse axis (AX1) situated at a rear end of the chassis (2), between a horizontal loading position and a substantially vertical offloading position, the bales (B111-B225) being loaded onto the platform when horizontal to constitute a load including at least one series of bales extending longitudinally, constituted of bales (B111-B116; B211-B216) placed one in front of the other on the platform (3), the bales (B111-B226) being offloaded by tilting the platform (3) to the vertical to constitute at least one stack of bales disposed one on the other, **characterised in that** it includes shifting means (28, 29) for shifting a part of the load (B114-B116; B214-B216; B224-B216) including a bale (B116; B216, B226) situated at one end of the load relative to the other bales of the load perpendicularly to a direction in which those other bales are aligned.

2. Device according to claim 1, wherein the platform includes a body (9) having a bearing surface (11) for the bales (B111-B226) and wherein the shifting means include a plate (28, 29) carried by the body (9) situated at one end of the platform (3) to receive the part of the load including an end bale (B116; B216, B226), the plate (28, 29) being mobile in a direction normal to the bearing surface (11) between a retracted position in which it is at the same level as the bearing surface (11) and a shifted position in which it projects beyond the bearing surface (11).

3. Device according to claim 2, wherein the body (9) has a generally rectangular contour including two lateral recesses (31, 32) and wherein the plate includes two mobile pads (28, 29) carried by the body (9), the two mobile pads (28, 29) being housed in the recesses (31, 32) when they are retracted.

4. Device according to claim 2 or 3, including lifting means actuated to move the plate (28, 29) between the retracted and shifted positions.

5. Device according to claim 2, 3 or 4, including at least one hydraulic actuator (41) for moving the plate (28, 29) between its retracted position and its shifted position.

6. Device according to any one of the preceding claims, including two side members (13) mobile between a position called the clamped position to hold the load in position on the platform and a position called the unclamped position to release the load.

## Patentansprüche

1. Vorrichtung zum Stapeln von Strohballen, umfassend: ein Rollgestell (2) und eine Plattform (3), die an diesem Gestell kippbar um eine an einem hinteren Ende des Gestells (2) befindliche horizontale Querachse (AX1) zwischen einer horizontalen Ladeposition und einer im Wesentlichen vertikalen Abladeposition gelagert ist, wobei die Ballen (B111-B226) auf die horizontale Plattform geladen werden, um eine Ladung zu bilden, die mindestens eine sich in Längsrichtung erstreckende Reihe von Ballen umfasst, die aus Ballen (B111-B116; B211-B216) gebildet ist, die voreinander auf der Plattform (3) abgelegt sind, wobei die Ballen (B 111-8226) durch Kippen der Plattform (3) in die Vertikale abgeladen werden, um mindestens einen Stapel von Ballen zu bilden, die übereinander angeordnet sind, **dadurch gekennzeichnet, dass** sie Versclaiebungsmittel (28, 29) umfasst, um einen Teil der Ladung (B114-B116; B214-B216, B224-B216), der einen sich an einem Ende der Ladung befindlichen Ballen (B116; B216, B226) enthält, in Bezug auf die anderen Ballen der Ladung senkrecht zu einer Richtung, in der diese anderen Ballen ausgerichtet sind, zu versetzen.

2. Vorrichtung nach Anspruch 1, wobei die Plattform einen Rahmen (9) umfasst, der eine Auflagefläche (11) zur Auflage der Ballen (B111-B226) aufweist, und wobei die Verschiebungsmittel eine von dem Rahmen (9) getragene Platte (28, 29) umfassen, die sich an einem Ende der Plattform (3) befindet und dazu bestimmt ist, den Teil der Ladung aufzunehmen, der einen Endballen (B116; B216, B226) enthält, wobei die Platte (28, 29) in einer zur Auflagefläche (11) senkrechten Richtung zwischen einer eingezogenen Position, in der sie auf gleicher Höhe wie die Auflagefläche (11) ist, und einer versetzten Position, in der sie über die Auflagefläche (11) vorsteht, beweglich ist.

3. Vorrichtung nach Anspruch 2, wobei der Rahmen (9) eine im Allgemeinen rechteckige Kontour hat, die zwei seitliche Vertiefungen (31, 32) umfasst, und wobei die Platte zwei beweglichen Schienen (28, 29) umfasst, die von dem Rahmen (9) getragen werden, wobei die beiden beweglichen Schienen (28, 29), wenn sie eingezogen sind, in den Vertiefungen (31, 32) aufgenommen sind.

4. Vorrichtung nach Anspruch 2 oder 3, umfassend Hubmittel, die gesteuert werden, um die Platte (28, 29) zwischen der eingezogenen und der versetzten Position zu bewegen,

5. Vorrichtung nach Anspruch 2, 3 oder 4, umfassend mindestens einen Hydraulikzylinder (41), um die Platte (28, 29) zwischen ihrer eingezogenen Position und ihrer versetzten Position zu bewegen.

6. Vorrichtung nach einem der vorhergehenden Ansprüche, umfassend zwei seitliche Bordwände (13), die zwischen einer sogenannten festgespannten Position zum Halten der Ladung in ihrer Position auf der Plattform und einer sogenannten gelösten Position zum Freigeben der Ladung beweglich sind.
